# FASCICULE DE BREVET EUROPEEN

(11) **EP 3 085 131 B1**
(45) Date de publication et mention de la délivrance du brevet: **19.02.2025**
(21) Numéro de dépôt: 14815377.8
(22) Date de dépôt: 19.12.2014
(51) Int. Cl.: H04W 12/50, H04W 12/0431, G07C 9/00, H04W 4/40, H04W 4/80, H04W 4/50, H04W 76/10

(54) **TÉLÉPHONE MOBILE APTE À S'APPARIER AUTOMATIQUEMENT AVEC UN VÉHICULE AUTOMOBILE ET PROCÉDÉ D'APPAIRAGE AUTOMATIQUE**
ZUR AUTOMATISCHEN PAARUNG MIT EINEM KRAFTFAHRZEUG FÄHIGES MOBILTELEFON UND VERFAHREN ZUR AUTOMATISCHEN PAARUNG
MOBILE TELEPHONE CAPABLE OF AUTOMATICALLY PAIRING WITH A MOTOR VEHICLE, AND AUTOMATIC PAIRING METHOD

(30) Priorité: 20.12.2013 FR 1303037
(43) Date de publication de la demande: 26.10.2016
(73) Titulaire: Valeo Comfort and Driving Assistance, 94000 Créteil (FR)
(72) Inventeur: MENARD, Eric, F-94046 Créteil CEDEX (FR); MASSON, Fabienne, F-94046 Créteil CEDEX (FR); GEHIN, Frédéric, F-94046 Creteil CEDEX (FR)
(86) Numéro de dépôt international: PCT/EP2014/078744
(87) Numéro de publication internationale: WO 2015/091951

(56) Documents cités:
- EP-A1- 2 112 797
- DE-A1- 102008 008 108
- DE-A1- 102012 012 389
- US-A1- 2013 017 816
- US-A1- 2013 099 892
- US-A1- 2013 259 232

## Description

L'invention concerne un téléphone mobile utilisé pour le verrouillage/déverrouillage et/ou le démarrage d'un véhicule automobile selon le protocole Bluetooth^{™} Low Energy (BLE), apte à s'apparier automatiquement avec ledit véhicule automobile. L'invention concerne également le procédé d'appairage automatique entre un téléphone mobile, utilisé pour le verrouillage/déverrouillage et/ou le démarrage d'un véhicule automobile selon le protocole Bluetooth^{™} Low Energy, et le véhicule automobile.

Certains véhicules automobiles comprennent aujourd'hui un équipement, ou dispositif, de contrôle qui est disposé de manière fixe à l'intérieur du véhicule automobile. Cet équipement de contrôle est chargé notamment de gérer de manière sécurisée des requêtes reçues depuis des accessoires en possession de l'utilisateur (clé électronique, badge...) afin de déterminer si la requête émise doit provoquer une commande (déverrouillage des portes, démarrage du véhicule par exemple) sur le véhicule. A cet effet, l'équipement de contrôle échange des données par voie d'ondes à courte portée avec des éléments identifiants associés au véhicule considéré.

Les éléments identifiants peuvent aujourd'hui être par exemple une clé électronique, parfois appelée "plip", ou une clé main libre, se présentant sous la forme d'un badge électronique. Ces éléments identifiants mémorisent des codes identifiants qui sont reconnus par le véhicule automobile auquel ils sont appairés, c'est-à-dire auquel ils sont associés de manière définitive pour se reconnaitre mutuellement. Un échange de données permettant d'aboutir à une commande sur le véhicule, par exemple une commande de déverrouillage des portes ou une commande de démarrage du véhicule, s'opère entre l'équipement de contrôle électronique du véhicule et l'élément identifiant. Un autre exemple de commande sur le véhicule peut également consister en une commande dite de « parking » consistant en un manœuvre automatique par laquelle le véhicule se gare ou se dégage sans nécessairement la présence du conducteur à l'intérieur.

Dans un premier exemple d'échanges de données, désigné comme mode RKE (pour Remote Keyless Entry en langue anglaise), on procède à une action, typiquement l'appui sur un bouton, sur un élément identifiant de type clé électronique. Cette action entraine l'émission par ladite clé électronique d'un signal radiofréquence (RF) typiquement à 433 MHz. Si l'équipement de contrôle du véhicule reconnait les identifiants véhiculés par le signal RF, alors il provoque une commande adaptée du véhicule, par exemple le déverrouillage des portières.

Dans un autre exemple d'échanges de données, désigné comme "mode PEPS" (pour Passive Entry/Passive Start en langue anglaise), on procède à une action sur le véhicule par exemple une saisie d'une poignée extérieure de portière. Le véhicule détecte cette action et, par l'intermédiaire de son équipement de contrôle, émet un signal basse fréquence à 125 KHz. Celui-ci est reçu par l'élément identifiant, qui renvoie un signal radiofréquence (RF) typiquement à 433 MHz afin d'être identifié, et le cas échéant reconnu par l'équipement de contrôle du véhicule pour provoquer une commande adaptée du véhicule considéré.

Si ces systèmes fonctionnent correctement et sont entrés dans les habitudes d'utilisation des possesseurs de véhicule, ils demeurent des systèmes fermés, c'est-à-dire des systèmes utilisant un protocole spécifique de communication entre l'élément identifiant et l'équipement de contrôle. D'autres équipements qui pourraient, du fait de leur caractère mobile et léger, faire office d'élément identifiant pour le véhicule ne peuvent ainsi pas accéder à ces fonctionnalités du fait de la spécificité du protocole existant jusqu'alors. C'est le cas par exemple des appareils de type téléphone mobile qui sont de plus en plus répandus.

C'est à cette fin que se sont développés ces dernières années des systèmes utilisant un protocole de communication plus ouvert comme le Bluetooth^{™} et plus récemment le « Bluetooth^{™} Low Energy (BLE)» pour Bluetooth^{™} version basse consommation d'énergie ; le protocole BLE est utilisé de manière optimisée notamment pour gérer au mieux les ressources énergétiques existantes. Le protocole BLE est également connu sous le nom de Bluetooth Smart (Marque déposée).

Sur la base de ce système, il est aujourd'hui possible de procéder au partage d'un véhicule par plusieurs utilisateurs. Ces opérations de partage trouvent une application avantageuse entre autre chez les loueurs de véhicule. Elles sont souvent désignés sous l'appellation anglophone « car sharing ».

Pour qu'un utilisateur puisse utiliser temporairement un véhicule à l'aide de son téléphone mobile, il est nécessaire qu'il charge sur son téléphone mobile les codes d'authentification lui permettant l'accès, le démarrage et/ou toutes les autres fonctions existantes du véhicule à la manière d'un utilisateur qui serait propriétaire du véhicule.

Une fois les codes d'authentification chargés sur le téléphone mobile, il subsiste quelques inconvénients.

Tout d'abord, le téléphone mobile bien que disposant des éléments lui permettant le verrouillage/déverrouillage et/ou le démarrage du véhicule à partir des codes d'authentification chargés, le niveau de sécurité du système n'est pas au niveau de celui d'une clé ayant été apparié en usine ou en concession.

Il en découle que l'utilisateur devra procéder à l'enregistrement de son téléphone mobile par le véhicule. Cette opération peut s'avérer compliquer et notamment nécessiter la présence d'une personne physique déjà autorisé à accéder au véhicule comme le loueur du véhicule.

De plus en plus, il est recherché de pouvoir louer un véhicule de façon totalement autonome, c'est-à-dire sans la présence physique d'une personne de la compagnie de location, tout en garantissant un niveau de sécurité maximum.

D'autre part, les codes d'authentification étant reçus par un téléphone mobile, se pose la question de la sécurisation de ces données sensibles. En effet, les dispositifs du type téléphone mobile sont potentiellement plus ouverts qu'un identifiant d'accès à distance de type classique.

Enfin, lors de l'initiation d'un échange par exemple du type accès mains-libres selon le protocole Bluetooth^{™} Low Energy, on est dans une situation où le véhicule agit en tant qu'équipement maître au sens du protocole BLE. Il en résulte qu'il va écouter l'ensemble des équipements environnant et leur envoyer entre autre un requête d'authentification. L'envoi de toutes ses requêtes est superflu, il serait donc utile de limiter l'envoi d'une requête uniquement à un équipement qui s'avérera autorisé, c'est-à-dire possédant les codes d'authentification valides.

US2013099892 A1, EP2112797 A1, US2013017816 A1, DE102008008108 A1, DE102012012389 A1 et US2013259232 A1 par exemple divulguent chacun différents systèmes d'accès à un véhicule automobile à l'aide d'un téléphone mobile.

A cet effet, l'invention a pour objet un téléphone mobile selon la revendication 1.

L'invention a aussi pour objet un procédé d'appairage d'un téléphone mobile avec un véhicule automobile selon la revendication 3.

D'autres avantages et caractéristiques apparaîtront à la lecture de la description de l'invention donnée à titre d'exemple, ainsi que sur les figures annexées sur lesquelles :
- la figure 1 représente une schématique d'un ensemble de verrouillage/déverrouillage et/ou de démarrage de véhicule automobile,
- la figure 2 représente un organigramme des étapes d'un procédé d'appairage selon un premier mode de réalisation,
- la figure 3 représente un organigramme des étapes d'un procédé d'appairage selon un deuxième mode de réalisation,

Sur ces figures, les éléments identiques portent les mêmes numéros de référence.

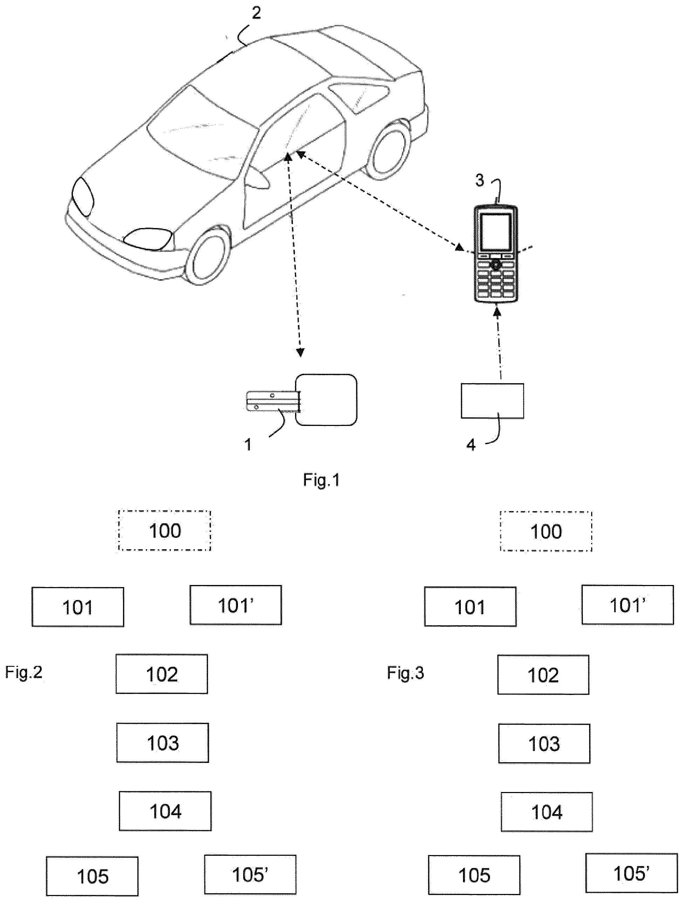

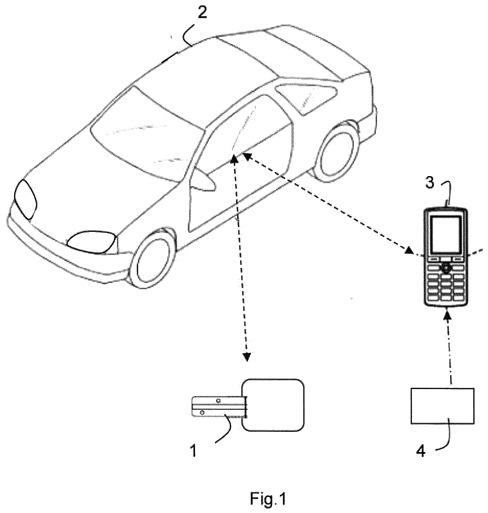

On a représenté sur la figure 1, une clé 1 pour le verrouillage/déverrouillage et/ou le démarrage d'un véhicule automobile 2.

Cette clé de verrouillage/déverrouillage et/ou de démarrage 1 peut avantageusement comporter une interface de communication configurée pour communiquer selon le protocole Bluetooth^{™} Low Energy (BLE). La clé 1 peut également présenter un insert métallique présentant un motif de verrouillage/déverrouillage unique associée à une serrure du véhicule.

La clé de verrouillage/déverrouillage et/ou de démarrage 1 est généralement configurée en usine ou en concession par le chargement d'un code authentification ID nécessaire pour le verrouillage/déverrouillage et/ou de démarrage selon le protocole BLE. La clé 1 est également enregistré par le véhicule 2 comme appariée, c'est-à-dire qu'elle peut à présent communiquer avec le véhicule automobile 2 selon le protocole BLE avec le meilleur niveau de sécurité.

Selon les principes de l'invention on peut également autoriser un équipement du type téléphone mobile 3 à fonctionner en tant que clé de verrouillage/déverrouillage et/ou de démarrage du véhicule 2 selon le protocole BLE, sans procéder aux configurations opérées en usine ou en concession.

Ce type de téléphone mobile comprend communément, en plus des interfaces de communication du type GSM, une interface de communication selon le protocole BLE.

Pour permettre ce fonctionnement en tant que clé de verrouillage/déverrouillage et/ou de démarrage du véhicule 2 selon le protocole BLE, on charge un code d'authentification ID nécessaire pour le verrouillage/déverrouillage et/ou le démarrage du véhicule 2 selon le protocole BLE.

Dans cette configuration, le verrouillage/déverrouillage et/ou le démarrage du véhicule 2 n'est pas réalisé avec le même niveau de sécurité des échanges qu'après un enregistrement, ou appairage du téléphone mobile 3 avec le véhicule 2.

Afin d'éviter à l'utilisateur une opération compliqué d'enregistrement du téléphone mobile 3 par le véhicule 2, l'invention présenté ici propose le chargement d'un code d'appairage AP sur le téléphone mobile 3, préalablement au premier échange BLE entre le téléphone mobile 3 et le véhicule 2.

Ainsi chargé sur le téléphone mobile 3, le code d'appairage AP, sera transmis automatiquement par le téléphone mobile 3 sur requête du véhicule 2, lors d'un échange BLE entre le téléphone mobile 3 et le véhicule 2. Puis une fois le code d'appairage AP validé par le véhicule 2, l'identité du téléphone mobile sera enregistré pour permettre le meilleur niveau de sécurité pour toutes les communications ultérieures entre le téléphone mobile 3 et le véhicule 2, selon le protocole BLE.

Dans un premier mode de réalisation, le code d'appairage AP est transmis au cours des premiers échanges entre le téléphone mobile 3 et le véhicule 2, c'est-à-dire lorsque l'utilisateur est sur le point d'accéder pour la première fois au véhicule 2. Compte tenu de la durée importante des échanges entre le téléphone mobile 3 et le véhicule 2 dans cette phase de validation du code d'appairage, l'utilisateur sera confronté à l'effet de mur, c'est-à-dire que lorsqu'il tira sur la poignée de la portière du véhicule 2, l'ensemble des échanges pour autoriser le déverrouillage ne seront pas achevés. Par contre lors d'un deuxième essai et lors de toutes les opérations ultérieures entre le téléphone mobile 3 et le véhicule 2, la validation du code d'appairage AP ne sera plus nécessaire et donc les opérations se dérouleront dans les mêmes conditions qu'avec une clé en sortie d'usine ou de concession.

Dans un mode de réalisation avantageux on envisage d'autoriser l'accès au véhicule 2 la base des codes d'authentification ID sans procéder préalablement à la validation du code d'appairage. Une fois l'accès autorisé, la validation du code d'appairage peut être entreprise. On évite l'effet de mur tout en permettant aux communications ultérieures entre le téléphone mobile 3 et le véhicule 2 de se produire avec le meilleur niveau de sécurité.

Dans certaine configuration d'échanges BLE entre le véhicule 2 et le téléphone mobile 3, par exemple pour autoriser un accès mains-libres, on se trouve dans une situation où le véhicule 2 agit en tant qu'équipement maître et le téléphone mobile agit en tant qu'équipement esclave au sens du protocole BLE.

Il en résulte que le véhicule 2 va opérer un balayage de l'ensemble des équipements BLE présent dans son environnement, et si il identifie plusieurs équipements BLE présentant un service adapté, leur envoyer entre autre un requête d'authentification. L'envoi de toutes ses requêtes étant superflu, l'invention présentée ici propose le chargement d'un code d'identification VIN. Ainsi, lorsque le véhicule aura achevé son étape de balayage, si il identifie un équipement ayant le service adapté et lui ayant communiqué le code d'identification VIN valide, il ne procédera qu'à l'envoi d'une requête d'authentification qu'à destination de cet équipement.

Bien entendu il est possible de révoquer un téléphone mobile 3 enregistré. Cette révocation peut être soit automatique en fonction d'une durée de validité accordée au téléphone mobile ou soit intentionnelle pour palier à une perte ou à un vol du téléphone mobile 4.

Selon un premier mode de réalisation, le code d'appairage AP, est chargé sur le téléphone mobile 3 depuis un serveur distant 4. Cette opération se produit par exemple suite à la réservation, par l'utilisateur du téléphone mobile 3, du véhicule 2, auprès d'un loueur de voiture.

Selon un autre mode de réalisation avantageux, le code d'identification VIN, est également chargé sur le téléphone mobile 3 depuis un serveur distant 4.

Selon un mode de réalisation avantageux, le code d'authentification ID, nécessaire pour le verrouillage/déverrouillage et/ou le démarrage par le téléphone mobile 3 du véhicule 2 selon le protocole BLE, est également chargé sur le téléphone mobile 3 depuis un serveur distant 4.

Dans un premier mode de réalisation, le code d'appairage AP, le code d'identification VIN, et le code d'authentification ID sont chargés au cours d'une même opération.

Dans un mode de réalisation alternatif, le code d'appairage AP, le code d'identification VIN et le code d'authentification ID sont chargés au cours d'opérations séparées.

Les serveurs distants utilisés sont généralement des serveurs gérés par les opérateurs téléphoniques. Dans ce cas, la transmission des codes d'authentification ID et/ou d'appairage AP se fait avantageusement par le réseau GSM.

On peut également envisager que le serveur distant soit le véhicule loué, ou dans un mode de réalisation alternatif un autre téléphone mobile.

Une fois les codes chargés, et afin de réduire les possibilités de piratage de ces codes qui pourraient aboutir au vol du véhicule 2, il est prévu d'utiliser, dans le téléphone mobile 3, un élément mémoire sécurisé SEC dans lequel seront stockés les codes.

L'accès aux données stockées dans ce type d'élément mémoire sécurisé SEC nécessite la saisie d'un code personnel. D'autre part ces éléments ont la capacité de détecter toutes tentatives d'intrusion physique et de s'autodétruire pour préserver les données secrètes mémorisées.

Dans un mode de réalisation alternatif, seul le code d'authentification ID sera stocké dans l'élément mémoire sécurisé SEC.

D'autre part il peut être avantageux d'utiliser comme élément mémoire sécurisé SEC la carte SIM déjà présente dans le téléphone mobile 4.

On va maintenant décrire les principales étapes du procédé d'appairage automatique d'un téléphone mobile 3 à un véhicule automobile 2 (figure 3) selon un premier mode de réalisation.

On considère tout d'abord que dans une étape préalable 100, le téléphone mobile 3 a chargé le code d'authentification ID nécessaire pour le verrouillage/déverrouillage et/ou le démarrage du véhicule 2 selon le protocole Bluetooth^{™} Low Energy (BLE).

Dans une première étape 101, le téléphone mobile 3 charge un code d'appairage AP pour permettre l'enregistrement automatique du téléphone mobile 3 auprès du véhicule automobile 2.

Dans une étape ultérieure 102, le téléphone mobile 3 entre en communication avec le véhicule 2 et transmet au véhicule 2 le code d'appairage AP.

Si le véhicule 2 valide la conformité du code d'appairage AP transmis, il enregistre dans une étape 103 le téléphone mobile 3 comme apparié.

Une fois enregistré par le véhicule 2 comme apparié, le téléphone mobile 3 procède dans une étape 104 à la transmission du code d'authentification ID nécessaire pour le verrouillage/déverrouillage et/ou le démarrage du véhicule 2.

Dans un mode de réalisation préférentiel non représenté, l'étape 104 de transmission du code d'authentification ID nécessaire pour le verrouillage/déverrouillage et/ou le démarrage du véhicule 2 précède les étapes 102 et 103 permettant l'enregistrement du téléphone mobile 3 comme apparié.

Comme nous l'avons indiqué précédemment, ce mode de réalisation permet d'éviter l'effet de mur qui peut produire lors de la première tentative d'accès pour un procédé selon le premier mode de réalisation.

Dans une étape supplémentaire 105 avantageuse, le téléphone mobile 3 enregistre le code d'authentification ID et/ou le code d'appairage dans un élément mémoire sécurisé SEC.

Dans un mode de réalisation préférentiel, l'élément mémoire sécurisé SEC est la carte SIM du téléphone mobile.

Selon un premier mode de réalisation, dans l'étape 100 et 101 respectivement de chargement du code d'authentification ID et du code d'appairage AP, le code d'authentification ID et le code d'appairage AP sont respectivement chargés sur le téléphone mobile 3 depuis un serveur distant 4. Cette opération se produit par exemple suite à la réservation, par l'utilisateur du téléphone mobile 3, du véhicule 2, auprès d'un loueur de voiture.

Dans un premier mode de réalisation, le code d'appairage AP et le code d'authentification ID sont chargés au cours d'une même opération.

Dans un autre mode de réalisation, le code d'appairage AP et le code d'authentification ID sont chargés au cours d'opérations séparées.

Les serveurs 4 distants utilisés sont généralement des serveurs gérés par des opérateurs téléphoniques.

D'autre part, la transmission des codes d'authentification ID et/ou d'appairage AP se fait avantageusement par le réseau GSM.

On peut également envisager que le serveur distant soit le véhicule loué, ou dans un mode de réalisation alternatif un autre téléphone mobile.

## Revendications

1. Téléphone mobile (3) contenant un code d'authentification (ID) pour permettre le verrouillage/déverrouillage et/ou le démarrage d'un véhicule automobile (2) par protocole Bluetooth Low Energy BLE, ledit téléphone comportant un code d'appairage AP, pour permettre l'enregistrement automatique du téléphone mobile (3) auprès dudit véhicule automobile (2), et un code d'identification (VIN) pour permettre la reconnaissance automatique du téléphone mobile (3) auprès dudit véhicule automobile (2), ledit téléphone comprenant en outre un élément mémoire sécurisé (SEC), **caractérisé en ce que** :
- le code d'authentification (ID), et le code d'appairage AP, et le code d'identification (VIN) sont stockés dans l'élément mémoire sécurisé (SEC);
- le chargement du code d'appairage (AP) sur le téléphone mobile (3) étant effectué préalablement au premier échange BLE par protocole Bluetooth Low Energy BLE entre le téléphone mobile (3) et le véhicule (2);
- le code d'appairage (AP), le code d'identification (VIN) et le code d'authentification (ID) sont chargés sur le téléphone mobile (3) au cours d'une même opération.

2. Téléphone mobile (3) selon la revendication 1, **caractérisé en ce que** l'élément mémoire sécurisé (SEC) est une carte SIM.

3. Procédé d'appairage d'un téléphone mobile (3) avec un véhicule automobile (2) selon le protocole Bluetooth Low Energy BLE, comprenant :
- l'étape (101) de charger le téléphone mobile (3) avec un code d'appairage (AP) BLE, pour permettre l'enregistrement automatique du téléphone mobile (3) auprès dudit véhicule automobile (2) ;
- l'étape (102) dans laquelle le téléphone mobile (3) entre en communication BLE avec le véhicule (2), et transmet le code d'appairage (AP) chargé dans l'étape (101) ;
- l'étape (103) dans laquelle si le véhicule (2) valide la conformité du code d'appairage (AP) transmis, il enregistre le téléphone mobile (3) comme apparié ;
ledit procédé comprend également :
- l'étape (104) dans laquelle le téléphone mobile (3) enregistre le code d'appairage (AP) chargé lors de l'étape (102) dans un élément mémoire sécurisé (SEC) du téléphone mobile (3), le chargement du code d'appairage (AP) sur le téléphone mobile (3) étant effectué préalablement au premier échange BLE par protocole Bluetooth Low Energy BLE entre le téléphone mobile (3) et le véhicule (2) ;
- l'étape préalable (100) de charger le téléphone mobile (3) avec un code d'authentification (ID) pour permettre le verrouillage/déverrouillage et/ou le démarrage du véhicule automobile (2) par protocole BLE ;
- l'étape (101') de charger le téléphone mobile (3) avec un code d'identification (VIN), pour permettre la reconnaissance automatique du téléphone mobile (3) auprès dudit véhicule automobile (2) ; ledit code d'authentification (ID) et ledit code d'identification (VIN) sont stockés avec ledit code d'appairage (AP) dans l'élément mémoire sécurisé (SEC); -
et le code d'appairage (AP), le code d'identification (VIN) et le code d'authentification (ID) sont chargés sur le téléphone mobile (3) au cours d'une même opération .

4. Procédé d'appairage selon la revendication 3, **caractérisé en ce que** l'élément mémoire sécurisé (SEC) du téléphone mobile (3) est une carte SIM.

5. Procédé d'appairage selon l'une quelconque des revendications 3 à 4, **caractérisé en ce que** le chargement du code d'appairage (AP) se fait depuis un serveur distant sur le réseau GSM.

6. Procédé d'appairage selon l'une quelconque des revendications 3 à 5, **caractérisé en ce que** le chargement code d'authentification (ID) se fait depuis un serveur distant sur le réseau GSM.

7. Procédé d'appairage selon l'une quelconque des revendications 3 à 6, **caractérisé en ce que** le chargement code d'identification (VIN) se fait depuis un serveur distant sur le réseau GSM.

## Patentansprüche

1. Mobiltelefon (3), das einen Authentifizierungscode (ID) zum Ver-/Entriegeln und/oder Starten eines Kraftfahrzeugs (2) unter Verwendung des Bluetooth Low Energy BLE-Protokolls enthält, wobei das Telefon einen Pairing-Code AP aufweist, um die automatische Registrierung des Mobiltelefons (3) bei dem besagten Kraftfahrzeug (2) zu ermöglichen, und einen Identifizierungscode (VIN), um die automatische Erkennung des Mobiltelefons (3) bei dem besagten Kraftfahrzeug (2) zu ermöglichen, wobei das Telefon darüber hinaus ein sicheres Speicherelement (SEC) aufweist, **dadurch gekennzeichnet, dass**:
- der Authentifizierungscode (ID) und der Pairing-Code AP und der Identifizierungscode (VIN) in dem sicheren Speicherelement (SEC) gespeichert sind;
- das Laden des Pairing-Codes (AP) auf das Mobiltelefon (3) vor dem ersten BLE-Austausch unter Verwendung des Bluetooth Low Energy BLE-Protokolls zwischen dem Mobiltelefon (3) und dem Fahrzeug (2) durchgeführt wird;
- der Pairing-Code (AP), der Identifizierungscode (VIN) und der Authentifizierungscode (ID) in einem einzigen Vorgang auf das Mobiltelefon (3) geladen werden.

2. Mobiltelefon (3) nach Anspruch 1, **dadurch gekennzeichnet, dass** das sichere Speicherelement (SEC) eine SIM-Karte ist.

3. Verfahren zum Pairing eines Mobiltelefons (3) mit einem Kraftfahrzeug (2) gemäß dem Bluetooth Low Energy BLE-Protokoll, das Folgendes aufweist:
- den Schritt (101) des Ladens des Mobiltelefons (3) mit einem BLE-Pairing-Code (AP), um die automatische Registrierung des Mobiltelefons (3) bei dem besagten Kraftfahrzeug (2) zu ermöglichen;
- den Schritt (102), in dem das Mobiltelefon (3) in eine BLE-Kommunikation mit dem Fahrzeug (2) eintritt und den in Schritt (101) geladenen Pairing-Code (AP) überträgt;
- den Schritt (103), in dem, wenn das Fahrzeug (2) die Übereinstimmung des übertragenen Pairing-Codes (AP) bestätigt, es das Mobiltelefon (3) als gepairt registriert;
wobei das Verfahren darüber hinaus Folgendes aufweist:
- den Schritt (104), in dem das Mobiltelefon (3) den im Schritt (102) geladenen Pairing-Code (AP) in einem sicheren Speicherelement (SEC) des Mobiltelefons (3) speichert, wobei das Laden des Pairing-Codes (AP) auf das Mobiltelefon (3) vor dem ersten BLE-Austausch unter Verwendung des Bluetooth Low Energy BLE-Protokolls zwischen dem Mobiltelefon (3) und dem Fahrzeug (2) durchgeführt wird;
- den vorausgehenden Schritt (100) des Ladens des Mobiltelefons (3) mit einem Authentifizierungscode (ID), um das Ver-/Entriegeln und/oder Starten des Kraftfahrzeugs (2) durch das BLE-Protokoll zu ermöglichen;
- den Schritt (101') des Ladens des Mobiltelefons (3) mit einem Identifikationscode (VIN), um die automatische Erkennung des Mobiltelefons (3) bei dem besagten Kraftfahrzeug (2) zu ermöglichen; wobei der Authentifizierungscode (ID) und der Identifizierungscode (VIN) zusammen mit dem Pairing-Code (AP) im sicheren Speicherelement (SEC) gespeichert werden;
- und der Pairing-Code (AP), der Identifizierungscode (VIN) und der Authentifizierungscode (ID) in einem einzigen Vorgang auf das Mobiltelefon (3) geladen werden.

4. Pairing-Verfahren nach Anspruch 3, **dadurch gekennzeichnet, dass** das sichere Speicherelement (SEC) des Mobiltelefons (3) eine SIM-Karte ist.

5. Pairing-Verfahren nach einem der Ansprüche 3 bis 4, **dadurch gekennzeichnet, dass** das Laden des Pairing-Codes (AP) von einem entfernten Server über das GSM-Netzwerk erfolgt.

6. Pairing-Verfahren nach einem der Ansprüche 3 bis 5, **dadurch gekennzeichnet, dass** das Laden des Authentifizierungscodes (ID) von einem entfernten Server über das GSM-Netzwerk erfolgt.

7. Pairing-Verfahren nach einem der Ansprüche 3 bis 6, **dadurch gekennzeichnet, dass** das Laden des Identifizierungscodes (VIN) von einem entfernten Server über das GSM-Netzwerk erfolgt.

## Claims

1. Mobile telephone (3) containing an authentication code (ID) to allow a motor vehicle (2) to be locked/unlocked and/or started by Bluetooth Low Energy (BLE) protocol, said telephone having a pairing code (AP), to allow automatic recording of the mobile telephone (3) by said motor vehicle (2), and an identification code (VIN) to allow automatic recognition of the mobile telephone (3) by said motor vehicle (2), said telephone moreover comprising a secure memory element (SEC), **characterized in that**:
- the authentication code (ID) and the pairing code (AP) and the identification code (VIN) are stored in the secure memory element (SEC);
- the pairing code (AP) is loaded onto the mobile telephone (3) prior to the first BLE interchange by Bluetooth Low Energy (BLE) protocol between the mobile telephone (3) and the vehicle (2); and
- the pairing code (AP), the identification code (VIN) and the authentication code (ID) are loaded onto the mobile telephone (3) in the course of one and the same operation.

2. Mobile telephone (3) according to Claim 1, **characterized in that** the secure memory element (SEC) is a SIM card.

3. Method for pairing a mobile telephone (3) with a motor vehicle (2) according to the Bluetooth Low Energy (BLE) protocol, comprising:
- the step (101) of loading the mobile telephone (3) with a BLE pairing code (AP), to allow automatic recording of the mobile telephone (3) by said motor vehicle (2);
- the step (102) in which the mobile telephone (3) takes up BLE communication with the vehicle (2) and transmits the pairing code (AP) loaded in the step (101);
- the step (103) in which, if the vehicle (2) confirms the compliance of the transmitted pairing code (AP), it records the mobile telephone (3) as paired;
said method also comprising:
- the step (104) in which the mobile telephone (3) records the pairing code (AP) loaded in the step (102) into a secure memory element (SEC) of the mobile telephone (3), the pairing code (AP) being loaded onto the mobile telephone (3) prior to the first BLE interchange by Bluetooth Low Energy (BLE) protocol between the mobile telephone (3) and the vehicle (2);
- the prior step (100) of loading the mobile telephone (3) with an authentication code (ID) to allow the motor vehicle (2) to be locked/unlocked and/or started by BLE protocol;
- the step (101') of loading the mobile telephone (3) with an identification code (VIN), to allow automatic recognition of the mobile telephone (3) by said motor vehicle (2); said authentication code (ID) and said identification code (VIN) are stored with said pairing code (AP) in the secure memory element (SEC);
- and the pairing code (AP), the identification code (VIN) and the authentication code (ID) are loaded onto the mobile telephone (3) in the course of one and the same operation.

4. Pairing method according to Claim 3, **characterized in that** the secure memory element (SEC) of the mobile telephone (3) is a SIM card.

5. Pairing method according to either one of Claims 3 and 4, **characterized in that** the pairing code (AP) is loaded from a remote server on the GSM network.

6. Pairing method according to any one of Claims 3 to 5, **characterized in that** the authentication code (ID) is loaded from a remote server on the GSM network.

7. Pairing method according to any one of Claims 3 to 6, **characterized in that** the identification code (VIN) is loaded from a remote server on the GSM network.
